# EUROPÄISCHE PATENTSCHRIFT

(11) **EP 3 539 639 B1**
(45) Veröffentlichungstag und Bekanntmachung des Hinweises auf die Patenterteilung: **20.01.2021**
(21) Anmeldenummer: 19156131.5
(22) Anmeldetag: 08.02.2019
(51) Int. Cl.: B01D 46/48

(54) **ENTSTAUBUNGSVORRICHTUNG**
DUST EXTRACTOR DEVICE
DISPOSITIF DE DÉPOUSSIÉRAGE

(30) Priorität: 12.03.2018 DE 102018105572
(43) Veröffentlichungstag der Anmeldung: 18.09.2019
(73) Patentinhaber: AL-KO Therm GmbH, 89343 Jettingen-Scheppach (DE)
(72) Erfinder: Seitz, Michael, 89359 Kötz (DE)
(74) Vertreter: Dr. Binder & Binder GbR

(56) Entgegenhaltungen:
- WO-A1-95/29387
- DE-A1-102007 042 043
- DE-A1-102008 056 938
- DE-A1-102015 119 761
- DE-U1-202016 100 873
- US-A1- 2014 116 535

## Beschreibung

Die Erfindung betrifft eine Entstaubungsvorrichtung zum Abscheiden von Verunreinigungen aus einem Luftstrom, zumindest aufweisend: einen Lufteinlass, einen Ventilator zum Ansaugen und Ausblasen des Luftstroms, eine Filteranordnung zum Reinigen des Luftstroms, welche eine Vielzahl von Filter aufweist, mindestens einen Auffangbehälter zum Sammeln der aus dem Luftstrom gefilterten Verunreinigungen, welcher in einem Gehäuse der Entstaubungsvorrichtung angeordnet ist, mindestens einen Sensor, welcher einen Füllstand des mindestens einen Auffangbehälters überwacht, und einen Luftauslass.

Entstaubungsvorrichtungen zum Abscheiden von Verunreinigungen aus einem Luftstrom, beispielsweise für den Einsatz in der Holzverarbeitung zum Reinigen der Luft von Spänen und Stäuben, sind bekannt. Die aus dem Luftstrom abgeschiedenen Partikel werden in einem oder mehreren Auffangbehältern gesammelt. Die Auffangbehälter befinden sich gemäß ATEX-Richtlinien im Staubbereich des Entstaubers in der Staubex-Zone 21. Zum Überwachen des Füllstandes dieser Auffangbehälter wurde daher bisher entweder ein Sichtfenster in das Gehäuse der Auffangbehälter eingebracht, durch welches der Füllstand durch regelmäßige Sichtkontrollen überwacht werden konnte. Dieses Vorgehen zur Füllstandsüberwachung ist jedoch aufwendig und ungenau. Oder es wurde ein optischer Sensor im Staubbereich eingesetzt, welcher jedoch aufgrund umherfliegender Staubpartikel Fehlermeldungen generiert. Auch dieses Verfahren ist daher ungenau.

Weiterhin sind Sensoren, insbesondere Ultraschallsensoren, zur Überwachung des Füllstandes von Schüttgütern und Flüssigkeiten in Behältern bekannt. Diese Sensoren sind grundsätzlich auch zum Einsatz in der Staubex-Zone 21 geeignet, allerdings sehr teuer und damit wirtschaftlich unrentabel.

Als Stand der Technik wird auf die Druckschriften DE 20 2016 100 873 U1, DE 10 2015 104 364 B3, DE 43 07 844 A1, DE 10 2015 119 761 A1 und DE 10 2008 056 938 A1 sowie WO 95 / 29387 A1 verwiesen.

Es ist daher Aufgabe der Erfindung, eine Entstaubungsvorrichtung mit einer verbesserten Füllstandsmessung und -überwachung in den Auffangbehältern bereitzustellen.

Diese Aufgabe wird durch die Merkmale des unabhängigen Patentanspruches gelöst. Vorteilhafte Weiterbildungen der Erfindung sind Gegenstand untergeordneter Ansprüche.

Der Erfinder hat erkannt, dass es möglich ist, einen herkömmlichen Füllstandssensor zur Überwachung und Messung des Füllstandes in die Staubex-Zone 21 an den Auffangbehältern einzusetzen, sofern der Sensor eine Abdeckung aufweist, welche den Blindbereich des Sensors vor dem Eindringen von Verunreinigungen schützt sowie ein Beschlagen der Sensorlinse mit Verunreinigungen verhindert.

Die Abdeckung kann als eine Art Schutzkanal ausgebildet sein. Durch die Abdeckung des Blindbereiches werden Fehlermeldungen des Sensors durch umherfliegende Partikel stark verringert. Beispielsweise wird der Sensor in ein Stahlgehäuse eingebaut, um einen Staubeintrag sicher zu verhindern. Elektrische Anschlüsse des Sensors können zudem geschützt und vom Staubbereich getrennt werden. Der Einstellbereich des Sensors kann wiederum durch eine Schutzhülse abgeschirmt werden.

Neben dem Gehäuseschutz wird durch den Schutzkanal die Messfunktionalität des Sensors dahingehend verbessert, dass vorbeifliegende Partikel im Blindzonenbereich nicht erfasst und somit Fehlfunktionen des Sensors ausgeschlossen werden können. Ausschlaggebend hierfür ist die Länge des Schutzkanals sowie dessen Geometrie in Höhe, Breite und Tiefe. Der Schutzkanal kann rechteckig oder zylindrisch ausgebildet sein, damit die kegelförmige Schallkeule nicht berührt wird, das heißt vom Schutzkanal vollständig seitlich umschlossen ist, und ebenfalls wiederum unnötige Fehlermeldungen vermieden werden.

Demgemäß schlägt der Erfinder vor, eine Entstaubungsvorrichtung zum Abscheiden von Verunreinigungen aus einem Luftstrom, beispielsweise von Spänen und Stäuben, zumindest aufweisend: einen Lufteinlass, einen Ventilator zum Ansaugen und Ausblasen des Luftstroms, eine Filteranordnung zum Reinigen des Luftstroms, welche eine Vielzahl von Filter aufweist, mindestens einen Auffangbehälter zum Sammeln der aus dem Luftstrom gefilterten Verunreinigungen, welcher in einem Gehäuse der Entstaubungsvorrichtung angeordnet ist, mindestens einen Sensor, welcher einen Füllstand des mindestens einen Auffangbehälters überwacht, und einen Luftauslass, dahingehend zu verbessern, dass der mindestens eine Sensor als Ultraschallsensor ausgebildet ist und eine kanalartige Abdeckung aufweist, welche den Blindbereich des mindestens einen Ultraschallsensor seitlich vollständig umschließt und nach unten, in Richtung Hauptabstrahlrichtung des Schallkegels zum Schüttgut, also zu den aus dem Luftstrom abgeschiedenen und im Auffangbehälter gesammelten Verunreinigungen, hin offen ist, sodass der Blindbereich des mindestens einen Ultraschallsensorvor dem Eindringen von Verunreinigungen geschützt ist sowie ein Beschlagen der Sensorlinse mit Verunreinigungen verhindert wird, und der mindestens eine Ultraschallsensor an dem Gehäuse über dem mindestens einen Auffangbehälter im Staubbereich des mindestens einen Auffangbehälters angeordnet ist.

Bei der erfindungsgemäßen Entstaubungsvorrichtung handelt es sich vorzugsweise um eine mobile Entstaubungsvorrichtung, im Folgenden mit Entstauber bezeichnet. Der Entstauber ist entsprechend vorteilhaft, zum Beispiel auf Rollen, angeordnet.

Im Entstauber wird die verunreinigte Luft von dem Ventilator angesaugt und gelangt durch den Lufteinlass in einen Innenraum beziehungsweise ein Gehäuse des Entstaubers. In dem Gehäuse verläuft der Luftstrom vorteilhafterweise zuerst durch einen Vorabscheideraum, welcher sich bevorzugt in Hauptströmungsrichtung von oben nach unten erweitert. Dies bewirkt eine Beruhigung des Luftstroms, das heißt, die Strömungsgeschwindigkeit der angesaugten Luft wird durch die Vergrößerung des Querschnitts verringert. Der Querschnitt und somit die Luftführung können entsprechend der Materialgröße und des Materialgewichts der Verunreinigungen eingestellt werden. Beispielsweise wird der Querschnitt so eingestellt, dass größere und schwerere Partikel früher abgeschieden werden, das heißt aus dem Luftstrom nach unten fallen, als kleinere Partikel.

Unter dem Abscheideraum sind die Auffangbehälter positioniert. Vorteilhafterweise ist mehr als ein Auffangbehälter vorgesehen, so dass eine größenabhängige Abscheidung und Sortierung der Verunreinigungen in die Auffangbehälter möglich ist. Die Auffangbehälter sind vorteilhafterweise in Hauptströmungsrichtung hintereinander unter dem Abscheideraum angeordnet. Größere Partikel werden bevorzugt in die vorderen Auffangbehälter und kleinere Partikel in die hinteren Auffangbehälter abgeschieden. Beispielsweise sind die Auffangbehälter als Rollcontainer ausgebildet. In die Auffangbehälter können beispielsweise Plastiksäcke eingesetzt werden, um ein einfaches Entleeren zu ermöglichen.

Die Filter des Entstaubers sind bevorzugt zylinderförmig ausgebildet, wobei der Luftstrom von unten nach oben entlang der Längserstreckung der Filter durch die Filteranordnung strömt. Dabei sind die Filter bevorzugt an einem oberen Ende befestigt. Ein unteres Ende der Filter ist bevorzugt geschlossen ausgebildet, das obere Ende bevorzugt offen.

Im weiteren Verlauf des Luftstromes, das heißt, nachdem dieser von unten nach oben durch die Filteranordnung geströmt ist, gelangt dieser in den Ventilator. Saugseitig am Ventilator kann ein parallel zur Hauptströmungsrichtung ausgerichtetes Ventilatorleitblech angeordnet sein, welches den aus der Filteranordnung angesaugten Luftstrom vergleichmäßigt. Druckseitig hinter dem Ventilator kann ein Expansionsraum ausgebildet sein. Hier wird der durch den Ventilator geblasene Luftstrom erneut beruhigt und verlangsamt, bevor der Luftstrom wieder aus dem Entstauber austritt.

Weiterhin umfasst der Entstauber mindestens einen Sensor zum Messen und Überwachen des Füllstandes der Auffangbehälter. Erfindungsgemäß weist der mindestens eine Sensor eine kanalartige Abdeckung auf. Diese Abdeckung bildet eine Art Kanal oder Gehäuse um den Blindbereich des Schallkegels des Sensors und schützt diesen so vor dem Eindringen von Verunreinigungen. Nach unten, also in Hauptabstrahlrichtung des Sensorschalles, ist die kanalartige Abdeckung offen. Die Sensorlinse ist folglich innerhalb der Abdeckung angeordnet. Zudem verhindert die Abdeckung noch, dass sich Verunreinigungen auf der Sensorlinse niederschlagen. Insgesamt verhindert die Abdeckung vorteilhafterweise Fehlfunktionen und Messungenauigkeiten des Sensors und ermöglicht somit dessen Anordnung im Staubbereich der Auffangbehälter des Entstaubers, vor allem in der Staubex-Zone 21.

Für eine exakte Messung und Überwachung des Füllstandes in den Auffangbehältern sind je Auffangbehälter ein oder mehrere Sensoren vorgesehen. In einer einfachen Ausführungsform des Entstaubers ist je Auffangbehälter genau ein Sensor vorgesehen. Im Folgenden wird die Erfindung für die genannte Ausführungsform, also ein Sensor pro Auffangbehälter, beschrieben.

Erfindungsgemäß ist der mindestens eine Sensor an einem Gehäuse der Entstaubungsvorrichtung über dem mindestens einen Auffangbehälter angeordnet. Unter dem Relativbegriff "über" wird im Rahmen dieser Erfindung eine Anordnung des Sensors verstanden, die horizontal betrachtet höher ist als ein oberes Ende des Auffangbehälters. So wird zum einen eine exakte Füllstandsüberwachung und zum anderen ein problemloses Entnehmen der Auffangbehälter aus dem Entstauber gewährleistet. Entsprechend kann der Sensor entweder direkt über dem Auffangbehälter oder leicht seitlich versetzt über dem Auffangbehälter angeordnet werden.

Erfindungsgemäß ist der mindestens eine Sensor als Ultraschallsensor ausgebildet. Ultraschallsensoren eignen sich besonders gut für die berührungslose Füllstandsüberwachung von Schüttgütern, wie zum Beispiel Stäuben oder Spänen.

Ultraschallsensoren führen eine Laufzeit- beziehungsweise Abstandsmessung zur Oberfläche des Schüttgutes durch und berechnen über den gemessenen Abstand und die bekannte Gesamthöhe des Auffangbehälters den jeweiligen Füllstand. Mittels eines Ultraschallsensors kann vorteilhafterweise zum einen eine kontinuierliche Messung des Füllstandes durchgeführt werden. Zum anderen kann der Ultraschallsensor auch als Füllstandgrenzschalter eingesetzt werden. Unterhalb der Sensorlinse, also am Anfang des Schallkegels, gibt es den sogenannten Blindbereich, in welchem keine Impulse empfangen werden können. Der Schallkegel hat beispielsweise einen Öffnungswinkel von ± 5°. Dieser kegelförmige Blindbereich ist besonders empfindlich und das Eindringen von Schmutz- oder Staubpartikeln in der Luft in den Blindbereich führt regelmäßig zu Fehlermeldungen. Durch die erfindungsgemäße Abdeckung wird der Blindbereich gegenüber der Umgebung abgeschirmt, wobei die Schallwellen ungehindert aus dem vorderen, offenen Ende der Abdeckung beziehungsweise des Schutzkanals austreten können.

Eine vorteilhafte Ausführungsform des Sensors sieht vor, dass ein minimal mit dem Sensor erfassbarer Füllstand des mindestens einen Auffangbehälters einstellbar ist. Mit anderen Worten kann ein Bereich beziehungsweise eine Höhe eingestellt werden, ab dem der Sensor das Signal ausgibt, dass ein maximaler Füllstand des Auffangbehälters erreicht ist. Hierzu kann der Abstand zwischen dem Sensor und der Oberfläche der im Auffangbehälter gesammelten Verunreinigungen justiert werden. Dieser Abstand beträgt beispielsweise zwischen 30 cm und 1 m. Die Einstellung des Abstandes erfolgt vorzugsweise mittels einer Stellschraube.

Erfindungsgemäß umschließt die kanalartige Abdeckung den Blindbereich des mindestens einen Sensors. Unter dem Begriff "Umschließen" wird hier verstanden, dass die Abdeckung den Blindbereich nach außen beziehungsweise seitlich umgibt, wobei die Abdeckung nach unten, in Richtung Hauptabstrahlrichtung des Schallkegels zum Schüttgut hin offen ist. Der Schallkegel sollte dabei die Abdeckung an keiner Stelle berühren. Daher ist die Abdeckung vorzugsweise mindestens so groß wie die breiteste beziehungsweise vorderste Stelle des Blindbereiches. Eine bevorzugte Ausführungsform sieht vor, dass der Abstand von der Abdeckung zumindest bis zur breitesten Stelle des Blindbereiches zwischen 5 mm und 20 mm beträgt.

Eine Ausführungsform der Abdeckung sieht vor, dass die Abmessungen der Abdeckung in Abhängigkeit der Abmessungen des Blindbereiches des mindestens einen Sensors ausgebildet werden. Mit anderen Worten wird die Geometrie der Abdeckung, vor allem deren Länge und Querschnitt beziehungsweise Durchmesser, auf die Geometrie des Blindbereiches und somit an den verwendeten Sensor angepasst. Es können zudem auch unterschiedliche Sensoren eingesetzt werden, die jeweils unterschiedlich große Blindbereiche aufweisen.

In einer besonderen Ausführungsform umfasst die Abdeckung daher ein Schiebe-/Stecksystem, mittels dem die Größe der Abdeckung variabel eingestellt werden kann. Die Größe der Abdeckung kann bevorzugt in der Länge und dem Querschnitt senkrecht zur Hauptabstrahlrichtung der Schallwellen angepasst werden. Das Schiebe-/Stecksystem umfasst beispielsweise eine Art Teleskopgestänge.

Beispielsweise weist die Abdeckung eine der nachfolgend genannten Formen auf: Zylinder, Rechteck, Quadrat, Achteck oder Kegel. Es wird darauf hingewiesen, dass diese Aufzählung nicht abschließend ist. Weitere Formen sind selbstverständlich möglich, ohne den Rahmen dieser Erfindung zu verlassen.

Eine weitere Ausführungsform der Abdeckung sieht vor, dass diese aus einem Stahlblech gefertigt ist. Alternativ ist eine Herstellung aus einem Kunststoff möglich. Ausschlaggebend bei der Materialwahl ist vor allem, dass das Material leicht zu reinigen ist und den Sicherheitsvorschriften für den Einsatz im Staubbereich des Entstaubers genügt. Bei einer Ausführung der Abdeckung aus einem Stahlblech wird dieses bevorzugt gefaltet und an den überlappenden Faltkanten verschraubt. Alternativ kann das Stahlblech auch verschweißt werden.

Noch eine Ausführungsform des Entstaubers sieht vor, dass ein weiteres Gehäuse beziehungsweise eine Abdeckung vorgesehen ist, in dem die Elektronik des mindestens einen Sensors angeordnet ist. So kann die Sensorelektronik ebenfalls vor Verunreinigungen geschützt und vom Staubbereich getrennt werden. Weiterhin kann auch über den Einstellbereich des Sensors ein zusätzliches Gehäuse ausgeführt sein.

Der Sensor ist bevorzugt am Gehäuse des Entstaubers angeordnet und befestigt. In einer Ausführungsform ist am Gehäuse der Entstaubungsvorrichtung ein Schrägblech zur Montage des mindestens einen Sensors vorgesehen. Der Sensor kann also vorteilhaft auf das Schrägblech montiert werden. Das Schrägblech steht unter einem einstellbaren Winkel vom Gehäuse ab, sodass der Schallkegel des Sensors direkt in den Auffangbehälter gerichtet ist. Eine weitere vorteilhafte Ausführungsform sieht daher vor, dass eine Neigung des Schrägbleches relativ zum Gehäuse einstellbar ist. Die Neigung des Schrägbleches kann beispielsweise kontinuierlich oder in diskreten Schritten einstellbar sein. Zudem kann die Neigung des Schrägbleches auch in Abhängigkeit des Füllstandes angepasst werden.

Im Folgenden wird die Erfindung anhand eines bevorzugten Ausführungsbeispiels mit Hilfe der Figuren näher beschrieben, wobei nur die zum Verständnis der Erfindung notwendigen Merkmale dargestellt sind. Es zeigen im Einzelnen:
- FIG 1:: eine schematische Querschnittsansicht eines Entstaubers mit einem Sensor,
- FIG 2:: eine schematische Perspektivansicht des Sensors gemäß der Figur 1,
- FIG 3:: eine schematische Perspektivansicht der Rückseite des Sensors gemäß der Figur 1,
- FIG 4:: eine schematische Querschnittsansicht des Sensors gemäß der Figur 1,
- FIG 5:: eine erste schematische Projektionsansicht des Sensors gemäß der Figur 1, und
- FIG 6:: eine weitere schematische Projektionsansicht des Sensors gemäß der Figur 1.

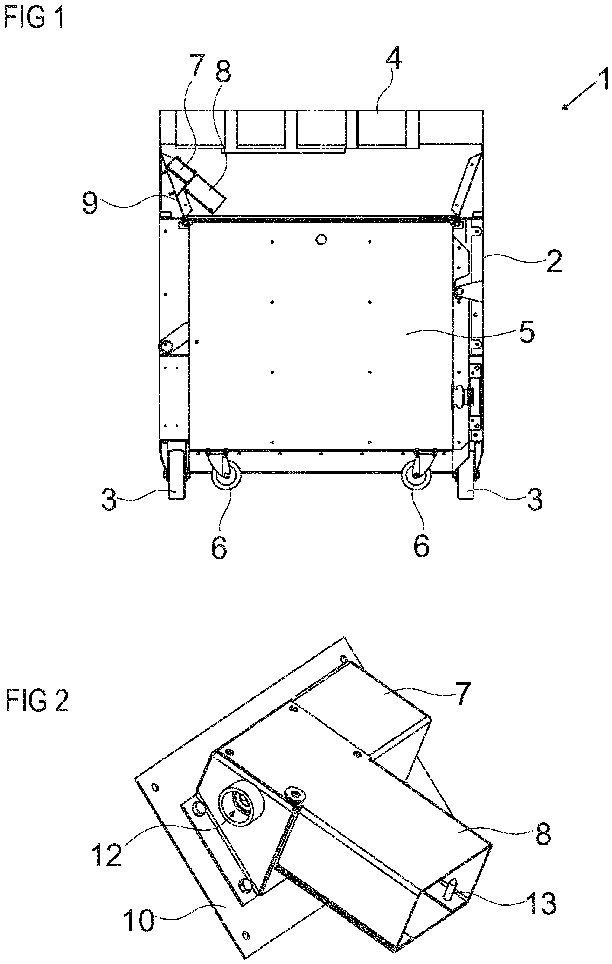

Die **Figur 1** zeigt eine schematische Querschnittsansicht eines erfindungsgemäßen Entstaubers 1 mit einem Sensor. Der Entstauber 1 weist ein äußeres Gehäuse 2 auf. Um die Mobilität des Entstaubers 1 zu gewährleisten, ist dieser auf Rollen 3 gelagert und kann somit verschoben werden. Im oberen Bereich der Abbildung sind die Filter 4 des Entstaubers 1 zu sehen, welche über den Auffangbehältern 5 angeordnet sind. Die Auffangbehälter 5 weisen ebenfalls Rollen 6 auf, um ein einfaches Entnehmen aus dem Gehäuse 2 zu ermöglichen. Gemäß der hier gezeigten Querschnittsansicht ist lediglich ein Auffangbehälter 5 zu sehen.

Zudem weist der Entstauber 1 einen Sensor zur Füllstandmessung des Auffangbehälters 5 auf. Bei dem Sensor handelt es sich um einen Ultraschallsensor. Dieser befindet sich erfindungsgemäß im Staubbereich des Entstaubers 1 über dem Auffangbehälter 5. In der hier gezeigten Ausführungsform ist genau ein Sensor pro Auffangbehälter 5 ausgeführt. Der Sensor ist auf einem Schrägblech 9 am Gehäuse 2 befestigt. Das Schrägblech 9 weist einen Winkel zur Gehäusewand auf. Zur Befestigung auf dem Schrägblech 9 weist der Sensor eine Grundplatte auf, siehe Figur 2. Um die Positionierung im Staubbereich zu ermöglichen, weist der Sensor erfindungsgemäß eine kanalartige Abdeckung 8 auf, welche um den vordersten Blindbereich des Schallkegels des Ultraschallsensors herum angeordnet und nach unten, also in Hauptabstrahlrichtung des Schallkegels, offen ist. Die Abdeckung 8 verhindert zum einen das Eindringen von Partikeln in den Schallkegel und zum anderen das Festsetzen von Partikeln auf der Sensorlinse. Dadurch können Fehlermeldungen des Sensors vermieden und eine exakte Füllstandmessung gewährleistet werden.

Die folgenden Figuren 2 bis 6 zeigen den Sensor mit der Abdeckung in verschiedenen Ansichten. Gleiche Bauteile sind jeweils mit gleichen Bezugszeichen gekennzeichnet.

In der **Figur 2** ist eine schematische Perspektivansicht des Sensors gemäß der Figur 1 gezeigt. Die einzelnen Bauteile und Gehäuseteile des Sensors sind auf der Grundplatte 10 montiert. Dies sind das eigentliche Gehäuse 7 des Sensors, in dem unter anderem die Sensorelektronik angeordnet ist, sowie die kanalartige Abdeckung 8.

Die Abdeckung 8 ist aus einem gefalteten Stahlblech ausgebildet. Die Seiten des Stahlblechs sind verschraubt. Im vorderen Bereich des durch die Abdeckung 8 gebildeten Kanals ist demgemäß eine Schraube 13 zu sehen.

Weiterhin ist die Abdeckung 8 in der hier beispielhaft gezeigten Ausführungsform rechteckig ausgebildet und steht schräg vom Gehäuse 7 des Sensors beziehungsweise von der Grundplatte 10 ab. Durch diese schräge Anordnung sowie das Schrägblech am Gehäuse 7 des Entstaubers wird gewährleistet, dass die Hauptabstrahlrichtung des Schalls stets möglichst mittig in Richtung Schüttgut im Auffangbehälter ausgerichtet ist.

Auf einer Seite des Gehäuses 7 des Sensors ist eine Stellschraube 12 ausgebildet, mittels der ein Signalbereich des Sensors eingestellt werden kann, also ab wann der Füllstand im Auffangbehälter als "voll" angezeigt wird.

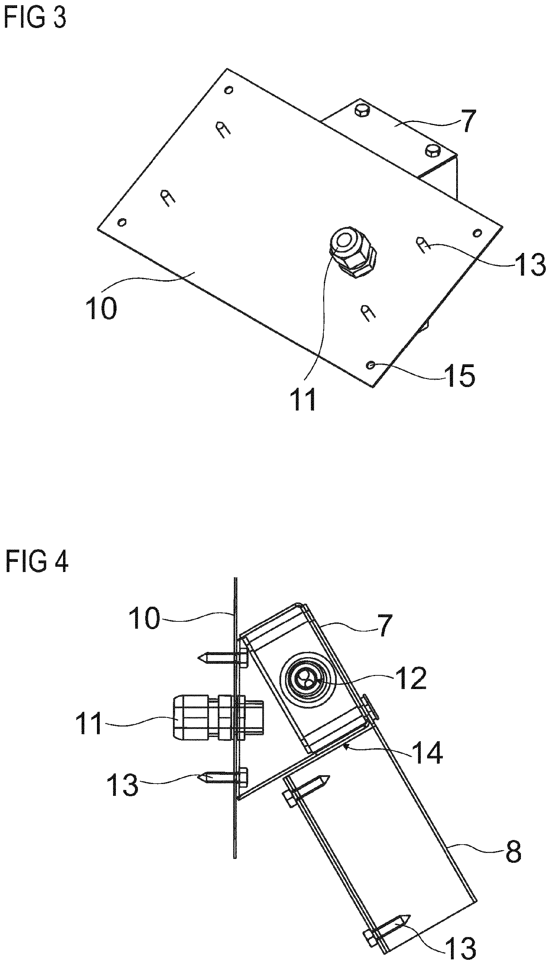

In der **Figur 3** ist noch eine schematische Perspektivansicht der Rückseite des Sensors gemäß der Figur 1 gezeigt. Durch die Grundplatte 10 ragen vier Schrauben 13 hindurch, mit denen die Abdeckung 8 sowie das Gehäuse 7 an der Grundplatte 10 befestigt sind. Weiterhin weist die Grundplatte 10 vier Löcher 15 für eine Verschraubung mit dem Schrägblech auf. Zudem ist auf der Rückseite der Grundplatte 10 eine Anschlussbuchse 11 für ein Kabel zu sehen.

Die **Figur 4** zeigt eine schematische Querschnittsansicht des Sensors gemäß der Figur 1. Zu sehen ist die Grundplatte 10, das eigentliche Gehäuse 7 des Sensors und die rechteckige Abdeckung 8. An der Grundplatte 10 befindet sich die Anschlussbuchse 11 für ein Elektrokabel. Die Abdeckung 8 ist unmittelbar an dem Gehäuse 7 des Sensors angeordnet, wobei die Sensorlinse 14 in die Gehäusewandung des Gehäuses 7 eingelassen ist, sodass diese den Schallkegel direkt in den Kanal der Abdeckung 8 einstrahlen kann. Der vorderste Bereich des Schallkegels, also der Blindbereich des Sensors, ist vollständig von der Abdeckung 8 umschlossen. Die Geometrie der Abdeckung 8, insbesondere deren Länge und Breite, richtet sich nach den Abmessungen des Blindbereiches. Seitlich am Gehäuse 7 des Sensors ist noch die Stellschraube 12 für die Justierung des Sensors ausgebildet.

Weiterhin sind noch die Schrauben 13 abgebildet, mit denen das Gehäuse 7 an die Grundplatte 10 montiert ist und das Stahlblech der Abdeckung 8 zusammen gehalten wird. Die beiden Schrauben 13 der Abdeckung 8 ragen in den Kanal hinein. Hierdurch wird die Funktionalität des Sensors jedoch nicht gestört, da diese Teile nicht beweglich sind und daher kein Störsignal erzeugen.

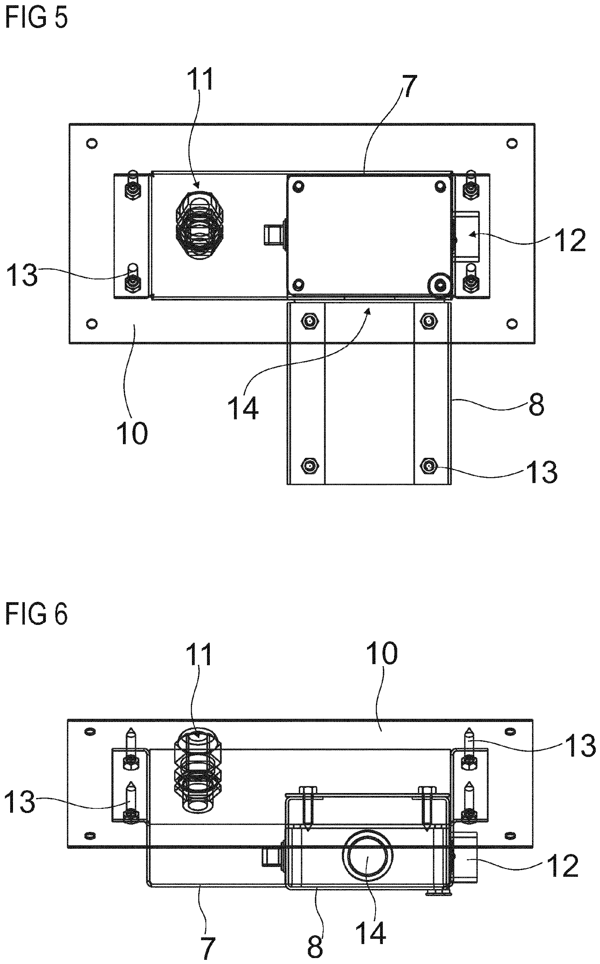

Die Figuren 5 und 6 zeigen jeweils noch zwei schematische Projektionsansichten des Sensors gemäß der Figur 1. Die **Figur 5** zeigt eine horizontale Projektionsansicht, während die **Figur 6** eine vertikale Projektionsansicht zeigt. Hier ist insbesondere die Sensorlinse 14 zu sehen, welche in das Gehäuse 7 eingelassen ist und von der Abdeckung 8 nach außen abgeschirmt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die nachfolgend angegebenen Merkmalskombinationen, sondern es können auch für den Fachmann offensichtlich ausführbare andere Kombinationen und Teilkombinationen aus den offenbarten Merkmalen gebildet werden.

### Bezugszeichenliste

- 1: Entstauber
- 2: Gehäuse
- 3: Rollen
- 4: Filter
- 5: Auffangbehälter
- 6: Rollen des Auffangbehälters
- 7: Sensorgehäuse
- 8: Abdeckung
- 9: Schrägblech
- 10: Grundplatte
- 11: Anschlussbuchse an der Grundplatte
- 12: Anschlussbuchse am Sensorgehäuse
- 13: Schraube
- 14: Sensorlinse
- 15: Löcher

## Patentansprüche

1. Entstaubungsvorrichtung (1) zum Abscheiden von Verunreinigungen aus einem Luftstrom zumindest aufweisend:
1.1. einen Lufteinlass,
1.2. einen Ventilator zum Ansaugen und Ausblasen des Luftstroms,
1.3. eine Filteranordnung zum Reinigen des Luftstroms, welche eine Vielzahl von Filtern (4) aufweist,
1.4. mindestens einen Auffangbehälter (5) zum Sammeln der aus dem Luftstrom gefilterten Verunreinigungen, welcher in einem Gehäuse (2) der Entstaubungsvorrichtung (1) angeordnet ist,
1.5. mindestens einen Sensor, welcher einen Füllstand des mindestens einen Auffangbehälters (5) überwacht, und
1.6. einen Luftauslass,
**dadurch gekennzeichnet, dass**
1.7. der mindestens eine Sensor als Ultraschallsensor ausgebildet ist und eine kanalartige Abdeckung (8) aufweist, welche den Blindbereich des mindestens einen Ultraschallsensors seitlich vollständig umschließt und nach unten, in Richtung Hauptabstrahlrichtung des Schallkegels zum Schüttgut, also zu den aus dem Luftstrom abgeschiedenen und im Auffangbehälter (5) gesammelten Verunreinigungen, hin offen ist, sodass der Blindbereich des mindestens einen Ultraschallsensors vor dem Eindringen von Verunreinigungen geschützt ist sowie ein Beschlagen der Sensorlinse (14) mit Verunreinigungen verhindert wird, und
1.8. der mindestens eine Ultraschallsensor an dem Gehäuse (2) über dem mindestens einen Auffangbehälter (5) im Staubbereich des mindestens einen Auffangbehälters (5) angeordnet ist.

2. Entstaubungsvorrichtung (1) gemäß dem voranstehenden Patentanspruch 1, **dadurch gekennzeichnet, dass** je Auffangbehälter (5) ein oder mehrere Sensoren vorgesehen sind.

3. Entstaubungsvorrichtung (1) gemäß einem der voranstehenden Patentansprüche 1 bis 2, **dadurch gekennzeichnet, dass** ein minimal mit dem Sensor erfassbarer Füllstand des mindestens einen Auffangbehälters (5) einstellbar ist.

4. Entstaubungsvorrichtung (1) gemäß einem der voranstehenden Patentansprüche 1 bis 3, **dadurch gekennzeichnet, dass** die Abmessungen der Abdeckung (8) in Abhängigkeit der Abmessungen des Blindbereiches des mindestens einen Sensors ausgebildet werden.

5. Entstaubungsvorrichtung (1) gemäß dem voranstehenden Patentanspruch 4, **dadurch gekennzeichnet, dass** die Abdeckung (8) ein Schiebe-/Stecksystem umfasst, mittels dem die Größe der Abdeckung (8) variabel eingestellt werden kann.

6. Entstaubungsvorrichtung (1) gemäß einem der voranstehenden Patentansprüche 1 bis 5, **dadurch gekennzeichnet, dass** die Abdeckung (8) eine der nachfolgend genannten Formen aufweist: Zylinder, Rechteck, Quadrat, Achteck oder Kegel.

7. Entstaubungsvorrichtung (1) gemäß einem der voranstehenden Patentansprüche 1 bis 6, **dadurch gekennzeichnet, dass** die Abdeckung (8) aus einem Stahlblech gefertigt ist.

8. Entstaubungsvorrichtung (1) gemäß einem der voranstehenden Patentansprüche 1 bis 7, **dadurch gekennzeichnet, dass** ein weiteres Gehäuse vorgesehen ist, in dem die Elektronik des mindestens einen Sensors angeordnet ist.

9. Entstaubungsvorrichtung (1) gemäß einem der voranstehenden Patentansprüche 1 bis 8, **dadurch gekennzeichnet, dass** am Gehäuse (2) der Entstaubungsvorrichtung (1) ein Schrägblech (9) zur Montage des mindestens einen Sensors vorgesehen ist.

10. Entstaubungsvorrichtung (1) gemäß dem voranstehenden Patentanspruch 9, **dadurch gekennzeichnet, dass** eine Neigung des Schrägbleches (9) relativ zum Gehäuse (2) einstellbar ist.

## Claims

1. Dust extractor device (1) for separating impurities from an airstream, at least having:
1.1 an air inlet,
1.2 a fan for sucking in and blowing out the airstream,
1.3 a filter arrangement for purifying the airstream, which has a multiplicity of filters (4),
1.4 at least one collecting container (5) for collecting the impurities filtered out of the airstream, which is arranged in a housing (2) of the dust extractor device (1),
1.5 at least one sensor which monitors a filling level of the at least one collecting container (5), and
1.6 an air outlet,
**characterized in that**
1.7 the at least one sensor is embodied as an ultrasonic sensor and has a duct-like cover (8) which completely encloses the blind area of the at least one ultrasonic sensor laterally and downwards, in the direction of the main beam direction of the sound cone towards the bulk material, that is to say it is open towards the impurities which are separated from the airstream and collected in the collecting container (5), so that the blind area of the at least one ultrasonic sensor is protected against the ingress of impurities, and impurities are prevented from becoming applied to the sensor lens (14), and
1.8 the at least one ultrasonic sensor is arranged on the housing (2) over the at least one collecting container (5), in the dust area of the at least one collecting container (5).

2. Dust extractor device (1) according to the preceding Patent Claim 1, **characterized in that** one or more sensors are provided per collecting container (5).

3. Dust extractor device (1) according to one of the preceding Patent Claims 1 to 2, **characterized in that** a filling level of the at least one collecting container (5), which is the minimum one which can be sensed with the sensor, can be set.

4. Dust extractor device (1) according to one of the preceding Patent Claims 1 to 3, **characterized in that** the dimensions of the cover (8) are embodied as a function of the dimensions of the blind area of the at least one sensor.

5. Dust extractor device (1) according to the preceding Patent Claim 4, **characterized in that** the cover (8) comprises a sliding/plug-in system by means of which the size of the cover (8) can be set in a variable fashion.

6. Dust extractor device (1) according to one of the preceding Patent Claims 1 to 5, **characterized in that** the cover (8) has one of the shapes mentioned above: cylinder, rectangle, square, octagon or cone.

7. Dust extractor device (1) according to one of the preceding Patent Claims 1 to 6, **characterized in that** the cover (8) is fabricated from a sheet steel.

8. Dust extractor device (1) according to one of the preceding Patent Claims 1 to 7, **characterized in that** a further housing is provided in which the electronics of the at least one sensor are arranged.

9. Dust extractor device (1) according to one of the preceding Patent Claims 1 to 8, **characterized in that** an oblique plate (9) for mounting the at least one sensor is provided on the housing (2) of the dust extractor device (1).

10. Dust extractor device (1) according to the preceding Patent Claim 9, **characterized in that** an inclination of the oblique plate (9) relative to the housing (2) can be set.

## Revendications

1. Dispositif de dépoussiérage (1) pour séparer des impuretés d'un flux d'air, présentant au moins :
1.1. une admission d'air,
1.2. un ventilateur pour aspirer et souffler le flux d'air,
1.3. un agencement de filtres pour purifier le flux d'air et qui présente une pluralité de filtres (4),
1.4. au moins un récipient collecteur (5) pour collecter les impuretés filtrées du flux d'air et qui est disposé dans un boîtier (2) du dispositif de dépoussiérage (1),
1.5. au moins un capteur qui surveille un niveau de remplissage dudit au moins un récipient collecteur (5), et
1.6. une évacuation d'air,
**caractérisé en ce que**
1.7. ledit au moins un capteur est réalisé sous la forme d'un capteur à ultrasons et présente un recouvrement (8) de type canal qui entoure la zone aveugle dudit au moins un capteur à ultrasons complètement sur le côté, et qui est ouvert vers le bas, dans la direction de rayonnement principale de l'angle d'émission jusqu'à la matière en vrac, c'est-à-dire jusqu'aux impuretés séparées du flux d'air et collectées dans le récipient collecteur (5), de sorte que la zone aveugle dudit au moins un capteur à ultrasons est protégée contre la pénétration d'impuretés ainsi que contre la formation de buée sur la lentille de capteur (14) avec des impuretés, et
1.8. ledit au moins un capteur à ultrasons est disposé sur le boîtier (2) au-dessus dudit au moins un récipient collecteur (5) dans la zone de poussière dudit au moins un récipient collecteur (5).

2. Dispositif de dépoussiérage (1) selon la revendication précédente 1, **caractérisé en ce qu'**un ou plusieurs capteurs sont prévus pour chaque récipient collecteur (5).

3. Dispositif de dépoussiérage (1) selon l'une quelconque des revendications précédentes 1 et 2, **caractérisé en ce qu'**un niveau de remplissage dudit au moins un récipient collecteur (5) pouvant être détecté de manière minimale par le capteur est réglable.

4. Dispositif de dépoussiérage (1) selon l'une quelconque des revendications précédentes 1 à 3, **caractérisé en ce que** les dimensions du recouvrement (8) sont réalisées en fonction des dimensions de la zone aveugle dudit au moins un capteur.

5. Dispositif de dépoussiérage (1) selon la revendication précédente 4, **caractérisé en ce que** le recouvrement (8) comprend un système coulissant/à emboîtement qui permet de régler de manière variable la taille du recouvrement (8).

6. Dispositif de dépoussiérage (1) selon l'une quelconque des revendications précédentes 1 à 5, **caractérisé en ce que** le recouvrement (8) présente l'une des formes mentionnées ci-après : cylindre, rectangle, carré, octogone ou cône.

7. Dispositif de dépoussiérage (1) selon l'une quelconque des revendications précédentes 1 à 6, **caractérisé en ce que** le recouvrement (8) est fabriqué en tôle d'acier.

8. Dispositif de dépoussiérage (1) selon l'une quelconque des revendications précédentes 1 à 7, **caractérisé en ce qu'**un boîtier supplémentaire est prévu dans lequel est disposée l'électronique dudit au moins un capteur.

9. Dispositif de dépoussiérage (1) selon l'une quelconque des revendications précédentes 1 à 8, **caractérisé en ce que** sur le boîtier (2) du dispositif de dépoussiérage (1) est prévue une tôle oblique (9) pour le montage dudit au moins un capteur.

10. Dispositif de dépoussiérage (1) selon la revendication précédente 9, **caractérisé en ce qu'**une inclinaison de la tôle oblique (9) par rapport au boîtier (2) est réglable.
